# EUROPÄISCHE PATENTSCHRIFT

(11) **EP 3 393 756 B1**
(45) Veröffentlichungstag und Bekanntmachung des Hinweises auf die Patenterteilung: **11.11.2020**
(21) Anmeldenummer: 16801209.4
(22) Anmeldetag: 24.11.2016
(51) Int. Cl.: B29C 67/00, B22F 3/105, B33Y 30/00

(54) **VORRICHTUNG ZUR HERSTELLUNG DREIDIMENSIONALER OBJEKTE**
DEVICE FOR PRODUCING THREE-DIMENSIONAL OBJECTS
DISPOSITIF POUR LA FABRICATION D'OBJETS TRIDIMENSIONNELS

(30) Priorität: 21.12.2015 DE 102015122460
(43) Veröffentlichungstag der Anmeldung: 31.10.2018
(60) Teilanmeldung: 20199368.0
(73) Patentinhaber: CL Schutzrechtsverwaltungs GmbH, 96215 Lichtenfels (DE)
(72) Erfinder: BECHMANN, Florian, 96215 Lichtenfels (DE); HERZOG, Frank, 96215 Lichtenfels (DE); ZEULNER, Fabian, 96215 Lichtenfels (DE)
(74) Vertreter: Hafner & Kohl PartmbB
(86) Internationale Anmeldenummer: PCT/EP2016/078654
(87) Internationale Veröffentlichungsnummer: WO 2017/108321

(56) Entgegenhaltungen:
- DE-A1-102011 087 374
- US-A1- 2002 195 746
- US-A1- 2014 175 708
- US-A1- 2014 263 209
- US-A1- 2014 265 049

## Beschreibung

Die Erfindung betrifft eine Vorrichtung zur Herstellung dreidimensionaler Objekte durch sukzessives Verfestigen von Schichten eines pulverförmigen, mittels Strahlung oder Teilchenstrahlung verfestigbaren Aufbaumaterials an den dem jeweiligen Querschnitt des Objektes entsprechenden Stellen, insbesondere eine generative Lasersinter- oder Laserschmelzvorrichtung.

Bekannte Vorrichtungen dieser Art weisen ein Gehäuse auf, in welchem eine Prozesskammer und eine Baukammer angeordnet sind. Innerhalb der Baukammer ist eine höhenverstellbare Tragevorrichtung zum Tragen des Objektes vorgesehen, außerdem ist eine Dosierkammer zum Bevorraten des Aufbaumaterials meist neben der Baukammer angeordnet. Eine Beschichtungsvorrichtung dient zum Aufbringen des Aufbaumaterials, eine Bestrahlungseinrichtung zum Bestrahlen der aufgetragenen Schichten des Aufbaumaterials innerhalb der Baukammer, wobei die Beschichtungsvorrichtung wenigstens über der Baukammer hin und her verfahrbar gelagert ist, wozu die Beschichtungsvorrichtung wenigstens einseitig in einer Führungseinrichtung gelagert ist.

Eine derartige Vorrichtung ist beispielsweise aus DE 10 2012 012 412 bekannt. Dort ist die Führungseinrichtung für den Beschichter im Seitenbereich der Prozesskammer angeordnet. Eine Vorrichtung gemäß dem Oberbegriff des Anspruchs 1 ist aus der US 2014/265049 A1 bekannt. Die bekannte Vorrichtung umfasst ein Gehäuse, in welchem eine Prozesskammer und eine Baukammer angeordnet sind, eine Tragevorrichtung zum Tragen des Objektes, eine Dosierkammer, eine Beschichtungsvorrichtung und eine Bestrahlungsvorrichtung. Die Beschichtungsvorrichtung ist über der Baukammer hin und her verfahrbar gelagert während die Führungsvorrichtung für die Bestrahlungsvorrichtung als im Deckenbereich der Prozesskammer angeordnete, hängende Gantry ausgebildet ist.

Grundsätzlich ist es aus anderen technischen Bereichen bekannt, Führungselemente für technische Apparate und Geräte wie beispielsweise Röntgenapparate in einem Raum für Röntgenuntersuchungen, als Gantry auszubilden und eine derartige Gantry entweder als Bodengestell oder auch hängend unter einer Decke des Raumes anzuordnen. Im Bereich der generativen Herstellungstechnik haben hängende Gantry-Anordnungen noch keinen Eingang gefunden.

Der Erfindung liegt die Aufgabe zugrunde, eine Vorrichtung mit den Merkmalen des Oberbegriffes des Anspruches 1 derart auszubilden, dass die Baufelder im Bereich der Prozesskammer flexibel an den jeweiligen Baujob ausgebildet werden können. Diese Aufgabe wird dadurch gelöst, dass die Führungsvorrichtungen für eine Beschichtervorrichtung oder weitere innerhalb der Prozesskammer verfahrbare Elemente als im Deckenbereich der Prozesskammer angeordnete, insbesondere hängend ausgebildete Gantry, insbesondere als Mehrfach-Gantry ausgebildet ist.

Eine hängende Gantry im Bereich einer Prozesskammer einer generativen Bauvorrichtung wie einer SLM- oder SLS-Vorrichtung ist insbesondere insoweit vorteilhaft, als der Baubereich einer Prozesskammer von Führungselementen völlig frei gehalten werden kann, an denen Beschichter, Scanner, Sensoren, Diodenarrays, Pulverzuführungen, Pulverabsaugungen oder sonstige Reinigungselemente für die Baukammer und die Prozesskammer, Lufteindüsungen und dgl. frei verfahrbar angeordnet werden können. Durch die Überkopf-Ausbildung der Gantry im Deckenbereich der Baukammer bleibt der untere Baukammerbereich frei zugänglich, Stützen, Strebenelemente oder langgestreckte Führungselemente im Prozesskammerboden oder Baukammerseitenbereich können entfallen. Die Führungselemente liegen im oberen Bereich der Baukammer und sind deswegen auch für Servicezwecke relativ einfach zugänglich.

Die Gantry kann in vorteilhafter Weiterbildung der Erfindung als Mehrfach-Gantry komplex ausgebildet sein und eine Mehrzahl von übereinander oder nebeneinander angeordneten Führungsbereichen für unterschiedliche, unabhängig voneinander bewegbare Elemente aufweisen. Grundsätzlich ist es möglich, in ein und demselben Führungselement auch unterschiedliche Elemente wie beispielsweise eine Kamera und einen Sensor gesondert zu verfahren, z. B. die Kamera von einer linken Seite der Gantry über den gesamten Gantry-Verfahrbereich und einen Sensor von der rechten Seite der Gantry über einen gesamten Verfahrbereich der Gantry.

Die Gantry kann im Deckenbereich der Prozesskammer auch austauschbar angeordnet werden. Insbesondere bietet sich eine Gantry-Einschubtechnik oder Einhängetechnik an, sodass eine Gantry im Bereich einer Prozesskammer an den jeweiligen Führungs- und Befestigungsanforderungen des anstehenden Baujobs angepasst werden kann. Die Gantry kann auch verschiebbar unter dem Deckenbereich der Prozesskammer angeordnet werden, d. h. sie kann je nach Bedarf nach links, rechts, vorne oder hinten verschoben werden oder gar durch eine Öffnung der Prozesskammer nach Art einer Schublade nach außen herausfahrbar oder durch eine Deckenöffnung der Prozesskammer nach oben aushebbar ausgebildet sein, damit sie einerseits für Servicezwecke frei zugänglich ist, andererseits aber auch zum Bestücken mit Sensormodulen, Beschichtermodulen und dgl. frei liegt. Ist eine Gantry völlig aus einer Prozesskammer entnehmbar gestaltet, dann kann sie als "Wechsel-Gantry" auch in eine andere Prozesskammer eingesetzt werden.

Die Gantry kann vorteilhafter Weise zumindest teilweise verdrehbar unter dem Deckenbereich der Prozesskammer angeordnet werden und an der Gantry können ein oder mehrere Wechselmontagemodule oder unterschiedliche verfahrbare Elemente angeordnet werden. Die Wechselmontagemodule können z. B. Lochplatten sein, die an der Gantry verschiebbar und automatisch verfahrbar angeordnet werden, aber so ausgebildet sind, dass auf einfache Weise dort Sensoren, Kameras Scanner, Reinigungselemente, Beschichter und dgl. angebracht werden können.

Die Gantry kann insgesamt oder wenigstens ein Abschnitt von ihr in einer nicht horizontalen Stellung angeordnet sein oder in eine nicht horizontale Stellung gebracht werden. Mit anderen Worten kann eine Gantry für besondere Zwecke auch schräg unter der Decke des Bauraums angeordnet werden, wenn der Baujob dies als vorteilhaft erscheinen lässt. Erfindungsgemäß bildet die Gantry eine Basis-Gantry an der ein oder mehrere Unter-Gantrys oder Wechsel-Gantrys angeordnet sind. Dadurch ergibt sich ein komplexes Verschiebungssystem zum Anbringen unterschiedlicher Elemente unter der Decke, sodass jede Stelle des Baufeldes durch unterschiedliche Elemente bedarfsweise unabhängig voneinander angefahren werden kann. Die wenigstens eine Unter- oder Wechsel-Gantry kann verschiebbar, verdrehbar, verkippbar und dgl. an der Basis-Gantry angeordnet werden.

Die Unter- oder Wechsel-Gantrys können in Gruppen über der Fläche des Bauraumes verteilt oder verteilbar angeordnet werden.

Die Führungselemente mehrerer Gantrys können derart ineinander angeordnet werden, dass an ihnen geführte, in der Prozesskammer hin und her verfahrbare Elemente über den gesamten Bereich der Prozesskammer verfahrbar sind.

Weiterhin kann es von großem Vorteil sein, wenn der Deckenbereich der Prozesskammer oberhalb der Gantry aufklappbar oder entnehmbar ausgebildet wird, sodass die Gantry von oben frei zugänglich wird. Gegebenenfalls ist es auch sinnvoll, die Gantry ebenfalls nach oben aus der sich dann ergebenden Deckenöffnung ausklappbar zu lagern, sodass sie -wie unten bereits erwähnt - zum Zwecke der Bestückung mit neuen oder anderen Modulen leicht zugänglich ist.

Die Erfindung ist anhand vorteilhafter Ausführungsbeispiele näher erläutert.

Diese zeigen:
- Fig. 1: eine schematische Schnittdarstellung einer Vorrichtung mit einer Dosierkammer, zwei Baukammern, einem Überlaufbehälter und einer unter dem Deckenbereich angeordneten hängenden Gantry mit mehreren Führungsbereichen;
- Fig. 2: eine schematische Teil-Schnittdarstellung eines Deckenbereichs einer Prozesskammer einer Vorrichtung gem. Fig. 1 mit einer hängenden Gantry, die austauschbar und verschiebbar angeordnet ist;
- Fig. 3: eine schematische Teil-Schnittdarstellung eines Deckenbereiches ähnlich Fig. 2, mit einer hängenden, drehbar angeordneten Gantry;
- Fig. 4: eine Teil-Schnittdarstellung durch einen Deckenbereich ähnlich Figuren 2 und 3 mit einer hängenden, drehbaren und verkippbaren Gantry;
- Fig. 5: eine schematische Teil-Schnittdarstellung eines Deckenbereiches einer erfindungsgemäßen Vorrichtung mit einer hängenden Basis-Gantry und einer Mehrzahl von Unter-Gantrys;
- Fig. 6: eine schematische Seitendarstellung einer Vorrichtung, bei der der Deckenbereich der Prozesskammer aufklappbar ist und an dem aufklappbaren Deckenbereich eine hängende Gantry angeordnet ist;
- Fig. 7: eine Darstellung ähnlich Fig. 6, wobei der Deckenbereich der Prozesskammer aufklappbar ist und eine gesondert hochklappbare Gantry durch die sich ergebene Deckenöffnung ausklappbar ist.

Die in den Zeichnungsfiguren schematisch dargestellte Vorrichtung 1 dient zur Herstellung dreidimensionaler Objekte 2 durch sukzessives Verfestigen von Schichten eines pulverförmigen, mittels Strahlung oder Teilchenstrahlung verfestigbaren Aufbaumaterials 3, das in einer Dosierkammer 4 der Vorrichtung 1 bereitgehalten wird. Der Bauvorgang erfolgt in zwei Baukammern 5, 6, wobei eine Vorrichtung mit nur einer oder mit mehr als zwei Baukammer ebenfalls im Rahmen der Erfindung liegt.

Übliche Vorrichtungen dieser Art weisen ein Gehäuse 7 auf, in dem eine Prozesskammer 8 mit den Baukammern 5 und 6 angeordnet sind. Den Baukammern 5, 6 ist jeweils eine Tragevorrichtung, die höhenverstellbar ausgebildet ist und im Laufe des Bauverfahrens nach unten abgesenkt werden kann. Das Aufbaumaterials 3 aus der Dosierkammer 4 wird über eine Beschichtungsvorrichtung 10 schichtweise innerhalb der Baukammern 5, 6 aufgetragen und durch eine Bestrahlungsvorrichtung 11, umfassend z. B. einen Laser 12 und einen Scanner 13 aufgeschmolzen, sodass sich nach Abkühlung und Aushärtung der Schmelze das Objekt 2 ergibt.

Im Deckenbereich 14 der Prozesskammer 8 ist eine hängende Gantry 15 angeordnet, die als Führungsvorrichtung z. B. für die Beschichtungsvorrichtung 10, einen verfahrbaren Scanner 13 oder weitere verfahrbare Elemente wie beispielsweise Sensoren, Pulverzuführungen, Diodenarrays, Pulverabsaugungen, Lufteindüsungen usw. frei verfahrbar angeordnet werden können.

Grundsätzlich ist es möglich, an einer Gantry 15 eine Mehrzahl von übereinander angeordneten oder nebeneinander angeordneten Führungsbereichen 16 für unterschiedliche bewegliche Elemente der genannten Art vorzusehen.

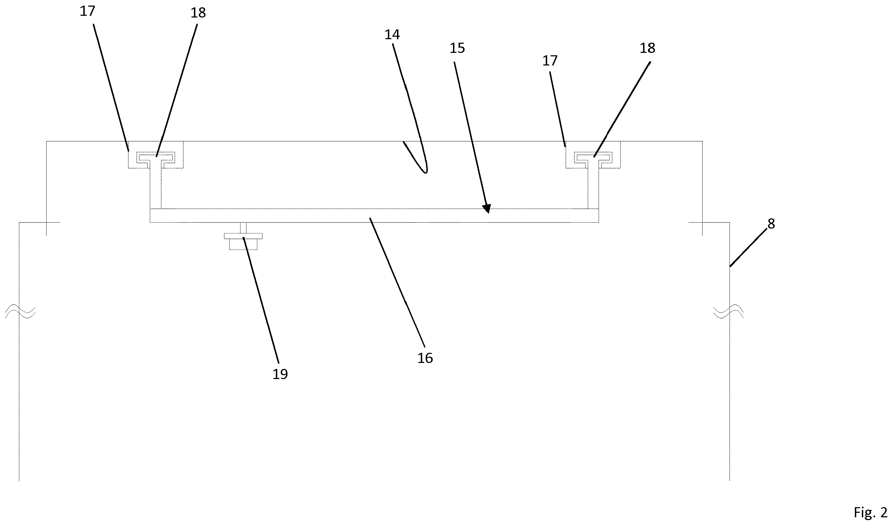

Aus dem in Figur 2 dargestellten Ausführungsbeispiel wird ersichtlich, dass die Gantry 15 im Deckenbereich 14 der Prozesskammer 8 austauschbar angeordnet ist. Dazu sind im Deckenbereich, unmittelbar an der Deckenunterseite Führungsschienen 17 befestigt, in die Halteelemente 18 eingeschoben werden können, sodass die Gantry 15 unter dem Deckenbereich 14 der Prozesskammer 8 insgesamt verschiebbar ist oder durch eine Öffnung der Prozesskammer 8 nach Art einer Schublade nach Außen herausfahrbar ist. Die Führungsschienen 17 und die Halteelemente 18 der Gantry können ähnlich von Schubladenführungen ausgebildet werden.

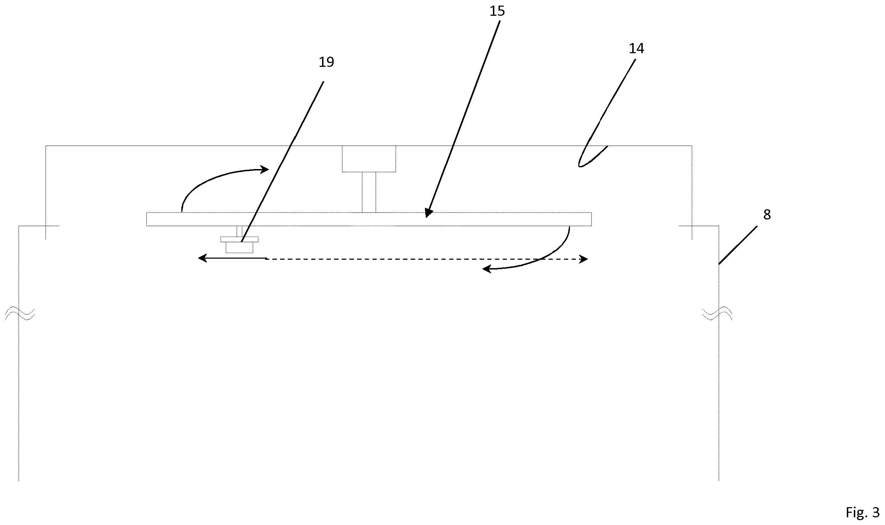

Bei dem in Figur 3 dargestellten Ausführungsbeispiel ist zu sehen, dass die Gantry 15 wenigstens teilweise verdrehbar unter dem Deckenbereich 14 der Prozesskammer angeordnet ist. An der Gantry 15 können im Rahmen der Erfindung auch ein oder mehrere Wechselmontagemodule 19 verschiebbar vorgesehen werden, wobei die Wechselmontagemodule 19 z. B. Lochbleche oder mit Schnapp-Rastverbindungen versehene Elemente sind, sodass Sensoren, Sanner und dgl. auf einfache Weise an den Wechsel-Montagemodulen 19 vorgesehen werden können.

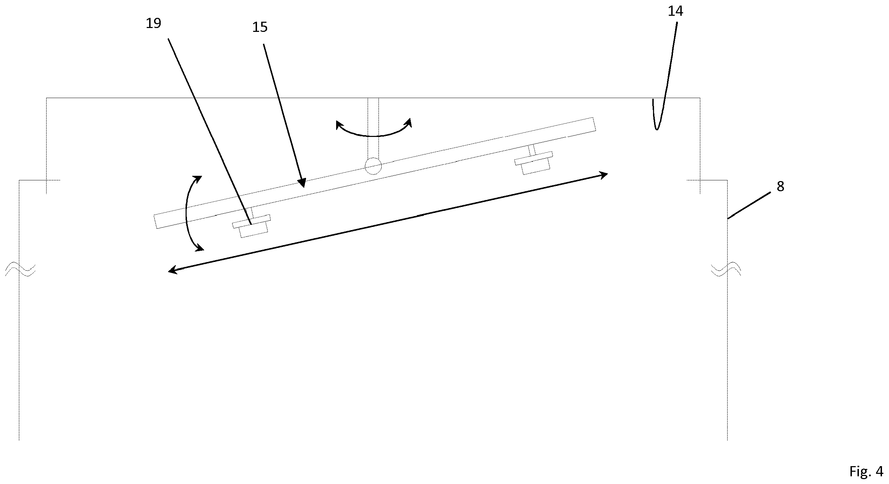

Bei dem in Figur 4 dargestellten Ausführungsbeispiel ist weiterhin zu sehen, dass die Gantry 15 oder zumindest Abschnitte der Gantry 15 in eine nicht horizontale Stellung gekippt werden können oder von vorne herein in einer solchen schrägen Stellung angeordnet sein können.

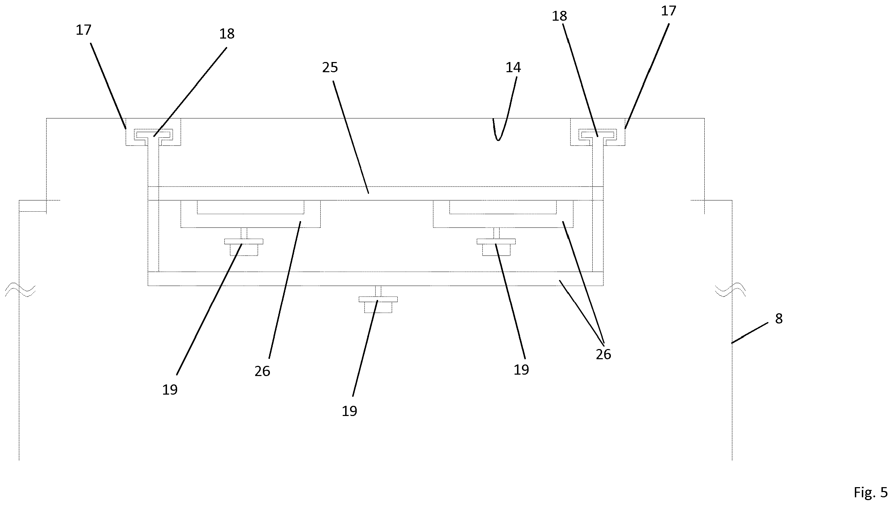

Figur 5 zeigt eine komplexere Ausbildung einer Gantry 15, die aus einer Basis-Gantry 25 und einer Mehrzahl von Unter-Gantrys oder Wechsel-Gantrys 26 besteht. Die Basis-Gantry 25 ist so ausgebildet, dass sie mehrere Unter- oder Wechselgantrys 26 tragen kann, die ihrerseits auch verschiebbar an der Basis-Gantry 25 angeordnet werden können. An den Wechsel-Gantrys oder Unter-Gantrys 26 sind dann wiederum verschiebbar z. B. über die genannten Montagemodule unterschiedliche Elemente wie Sensoren, Beschichter, Scanner, Absaugungen und dgl. angeordnet. Durch diese Kombination von wenigstens einer Basis-Gantry und einer Mehrzahl von Wechsel- oder Unter-Gantry 26 ergibt sich eine Vielzahl von Montage- und Verfahrmöglichkeiten für unabhängig voneinander bewegbare oder verschiebbare Elemente wie beispielsweise Sensorelemente, Scanner, Beschichter und dgl.

Die Unter- oder Wechsel-Gantry 26 können entsprechend den Figuren 3 und 4 jeweils auch verdrehbar oder verkippbar an der Basis-Gantry 25 angebracht werden. Wechsel- oder Unter-Gantrys 26 können über die Fläche des Bauraums 8 oder auch der Prozesskammer 8 verteilt oder verteilbar angeordnet werden. Die Basis-Gantry 25 oder die Mehrzahl von Gantrys und/oder Wechsel- oder Unter-Gantrys 26 können motorisch verstellt werden, sodass eine prozessgesteuerte automatische Verstellung der Gantrys 15, 25 und der an Ihnen befestigten Elemente möglich ist.

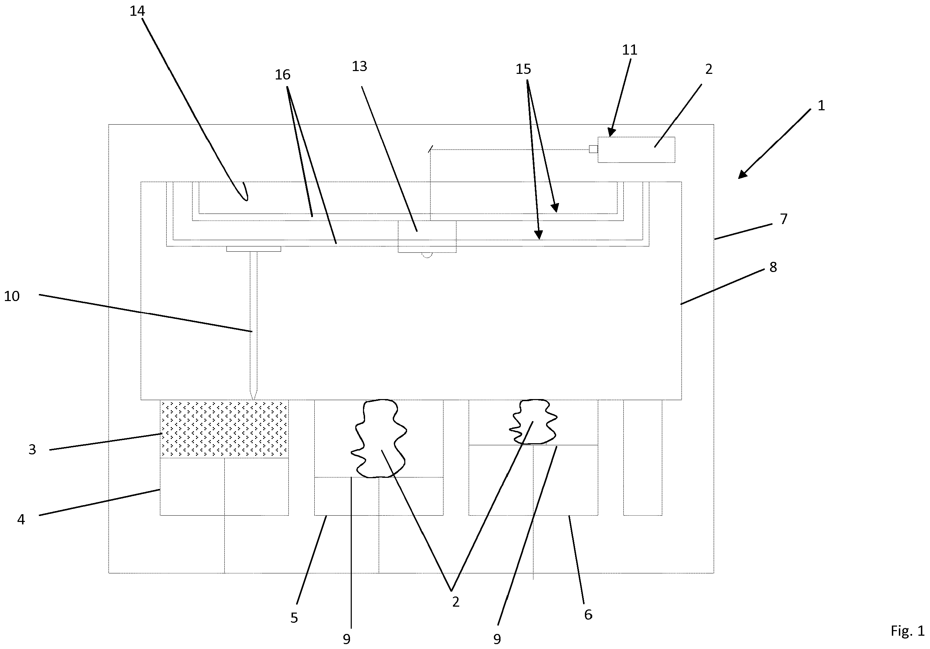

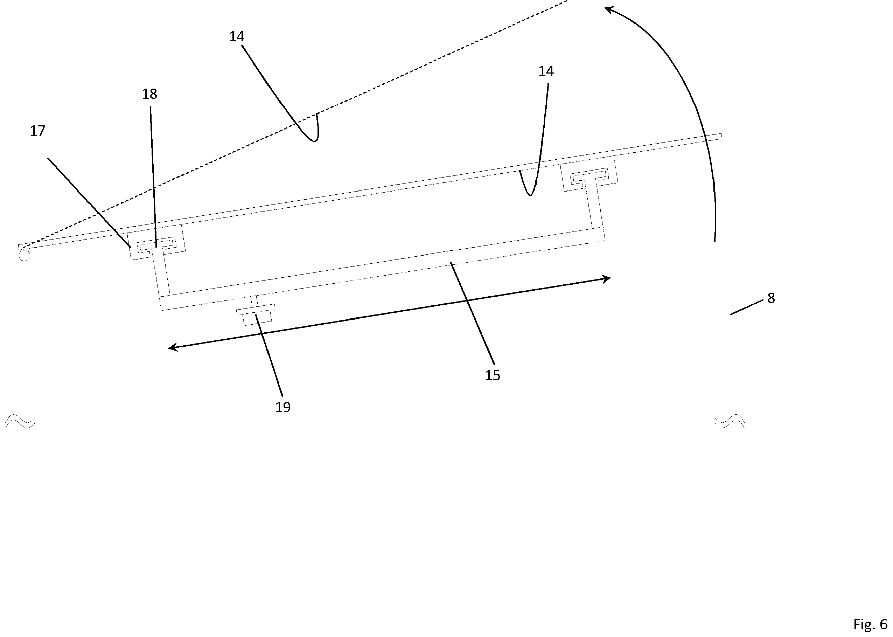

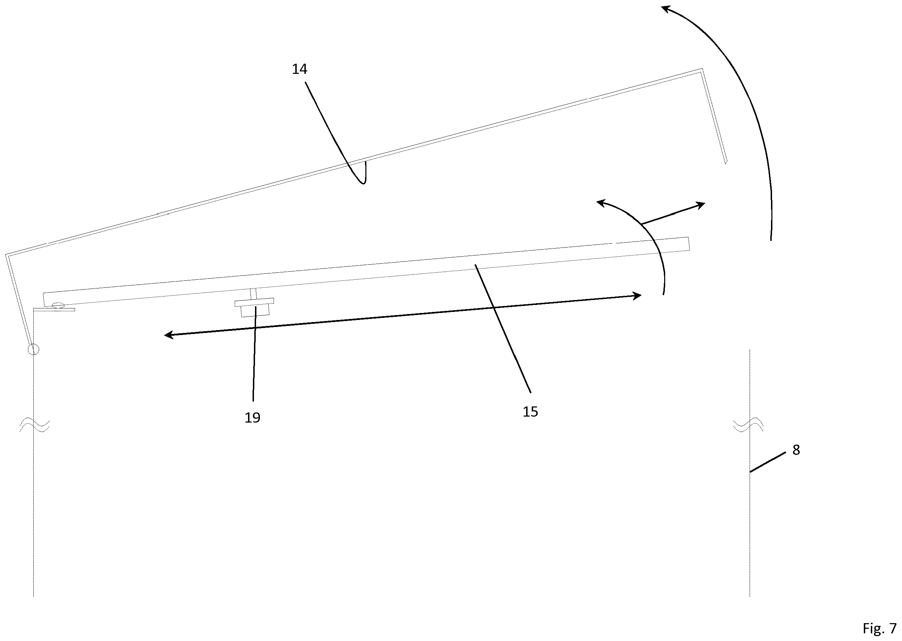

Die Figuren 6 und 7 zeigen zwei Ausführungsformen, bei denen der Deckenbereich 14 der Prozesskammer 8 aufklappbar gestaltet ist, sodass entweder eine an dem Deckenbereich befestigte Gantry 15 (Fig. 6) mit dem Deckenbereich 14 hochgeklappt wird und dann zu Servicezwecken oder zur Neubestückung mit geeigneten Elementen freiliegt oder gemäß Fig. 7 der Deckenbereich 14 gesondert aufgeklappt wird und dann die Gantry 15 gesondert hochgeklappt werden kann. Es sei angemerkt, dass jede Gantry in Fig. 1, in Fig. 2, Figuren 6 und 7 verschiebbar, verdrehbar, verkippbar, als Einfach- oder Mehrfach-Gantry, als Basis-Gantry mit Unter-Gantrys und dgl. ausgebildet sein kann. Aus Gründen der Vereinfachung wird davon abgesehen, z. B. in Figuren 6 und 7 eine Basis-Gantry mit Unter-Gantrys darzustellen. Dennoch liegt es im Rahmen der Erfindung, derartige komplexe Gantrys unter einem aufkappbaren Deckel vorzusehen, wobei auch eine Verdrehbarkeit und Verkippbarkeit dieser Gantrys im Rahmen der Erfindung liegt.

### BEZUGSZEICHENLISTE

- 1: Vorrichtung
- 2: Objekt
- 3: Aufbaumaterial
- 4: Dosierkammer
- 5: Baukammer
- 6: Baukammer
- 7: Gehäuse
- 8: Prozesskammer
- 9: Tragevorrichtung
- 10: Beschichtungsvorrichtung
- 11: Bestrahlungsvorrichtung
- 12: Laser
- 13: Scanner
- 14: Deckenbereich
- 15: Gantry
- 16: Führungsbereich
- 17: Führungsschienen
- 18: Halteelemente
- 19: Wechsel-Montagemodul

- 25: Basis-Gantry
- 26: Unter-oder Wechsel-Gantrys

## Patentansprüche

1. Vorrichtung (1) zur Herstellung dreidimensionaler Objekte (2) durch sukzessives Verfestigen von Schichten eines pulverförmigen, mittels Strahlung, insbesondere elektromagnetischer Strahlung oder Teilchenstrahlung verfestigbaren Aufbaumaterials (3) an den dem jeweiligen Querschnitt des Objektes entsprechenden Stellen, insbesondere SLM- oder SLS-Vorrichtung, wobei die Vorrichtung (1) umfasst:
ein Gehäuse (7), in welchem eine Prozesskammer (8) und wenigstens eine Baukammer (5, 6) angeordnet sind, wobei die wenigstens eine Baukammer (5, 6) eine Tragevorrichtung (9) zum Tragen des Objektes (2) innerhalb der Baukammer (5, 6) umfasst,
eine Dosierkammer (4) zum Bevorraten des Aufbaumaterials (3),
eine Beschichtungsvorrichtung (10) zum Aufbringen des Aufbaumaterials (3) und eine Bestrahlungsvorrichtung (11) zum Bestrahlen der aufgetragenen Schichten des Aufbaumaterials (3), wobei
die Beschichtungsvorrichtung (10) wenigstens über der Baukammer (5, 6) hin und her verfahrbar gelagert ist, wozu die Beschichtungsvorrichtung (10) wenigstens einseitig in einer Führungseinrichtung gelagert ist, wobei die genannte und/oder eine weitere Führungsvorrichtung für weitere innerhalb der Prozesskammer (8) verfahrbare Elemente als im Deckenbereich (14) der Prozesskammer (8) angeordnete, insbesondere hängende Gantry (15, 25) ausgebildet ist, **dadurch gekennzeichnet, dass** die Gantry eine Basis-Gantry (25) bildet, an der ein oder mehrere Unter-Gantrys oder Wechsel-Gantrys (26) angeordnet sind.

2. Vorrichtung nach Anspruch 1, **dadurch gekennzeichnet, dass** die Gantry (15, 25) eine Mehrzahl von übereinander angeordneten oder nebeneinander angeordneten Führungsbereichen für unterschiedliche bewegliche Elemente aufweist.

3. Vorrichtung nach einem der vorhergehenden Ansprüche, **dadurch gekennzeichnet, dass** die Gantry (15, 25) im Deckenbereich (14) der Prozesskammer (8) austauschbar angeordnet ist.

4. Vorrichtung nach einem der vorhergehenden Ansprüche, **dadurch gekennzeichnet, dass** die Gantry (15, 25) verschiebbar unter dem Deckenbereich (14) der Prozesskammer (8) angeordnet ist.

5. Vorrichtung nach Anspruch 4, **dadurch gekennzeichnet, dass** die Gantry (15, 25) insbesondere durch eine Öffnung der Prozesskammer (8) nach Art einer Schublade nach außen herausfahrbar ausgebildet ist.

6. Vorrichtung nach einem der vorhergehenden Ansprüche, **dadurch gekennzeichnet, dass** die Gantry (15, 25) wenigstens teilweise verdrehbar unter dem Deckenbereich (14) der Prozesskammer (8) angeordnet ist.

7. Vorrichtung nach einem der vorhergehenden Ansprüche, **dadurch gekennzeichnet, dass** an der Gantry (15, 25) ein oder mehrere WechselMontagemodule (19) für unterschiedliche verfahrbare Elemente angeordnet sind.

8. Vorrichtung nach einem der vorhergehenden Ansprüche, **dadurch gekennzeichnet, dass** die Gantry (15, 25) insgesamt oder Abschnitte der Gantry in einer nicht horizontalen Stellung angeordnet oder in eine solche Stellung bringbar sind.

9. Vorrichtung nach einem der vorhergehenden Ansprüche, **dadurch gekennzeichnet, dass** die wenigstens eine Unter- oder Wechsel-Gantry (26) verschiebbar, verdrehbar oder verkippbar an der Basis-Gantry (25) angeordnet ist-

10. Vorrichtung nach einem der vorhergehenden Ansprüche, **dadurch gekennzeichnet, dass** die Vorrichtung mehrere Unter- oder Wechselgantrys (26) umfasst, wobei die Unter- oder Wechsel-Gantrys (26) in Gruppen über der Fläche des Bauraums verteilt oder verteilbar angeordnet sind.

11. Vorrichtung nach einem der vorhergehenden Ansprüche, **dadurch gekennzeichnet, dass** die Vorrichtung mehrere Gantrys (15, 25) umfasst und die Führungselemente der Gantrys (15, 25) derart ineinander angeordnet sind, dass an ihnen geführte, in der Prozesskammer (8) hin- und herfahrbare Elemente über den gesamten Bereich der Prozesskammer (8) verfahrbar sind.

12. Vorrichtung nach einem der vorhergehenden Ansprüche, **dadurch gekennzeichnet, dass** die Gantry (15, 25) und/oder die wenigstens eine Wechsel-Gantry (26) motorisch verstellbar ist.

13. Vorrichtung nach einem der vorhergehenden Ansprüche, **dadurch gekennzeichnet, dass** der Deckenbereich (14) der Prozesskammer (8) oberhalb der Gantry (15, 25) aufklappbar oder entnehmbar ausgebildet ist.

14. Vorrichtung nach Anspruch 13, **dadurch gekennzeichnet, dass** die Gantry (15, 25) durch den geöffneten Deckenbereich (14) der Prozesskammer (8) nach außen ausklappbar gelagert ist.

## Claims

1. Device (1) for the manufacturing of three-dimensional objects (2) by way of successive hardening of layers of a powder set-up material (3) by means of electromagnetic radiation of particle radiation, on the points corresponding to the respective cross section of the object, in particular an SLM or SLS device, wherein the device (1) comprises:
a housing (7), in which a process chamber (8) and at least one build chamber (5, 6) is arranged, wherein at least on build chamber (5, 6) comprises a carrying device (9) for carrying the object (2) inside of the build chamber (5, 6);
a dosing chamber (4) for storing the set-up material (3);
a coating device (10) for applying the set-up material (3) and a radiation device (11) for radiating the applied layers of the set-up material (3), wherein
the coating device (10) is positioned so that it can be moved back and forth at least above the build chamber (5, 6), for which purpose the coating device (10) is positioned at least on one side on a guide device, wherein said and/or further guide devices for further elements movable within the process chamber (8) is/are embodied as elements suspended from the ceiling area (14) of the process chamber (8), in particular as suspended gantries (15, 25);
**characterised in that**
the gantry forms a base gantry (25) on which one or several sub-gantries or exchange gantries (26) are arranged.

2. Device according to claim 1, **characterised in that** the gantry (15, 25) has a number of guide areas arranged on top of or next to each other for different movable elements.

3. Device according to one of the foregoing claims, **characterised in that** the gantry (15, 25) is arranged to be replaceable in the ceiling area (14) of the process chamber (8).

4. Device according to one of the foregoing claims, **characterised in that** the gantry (15, 25) is arranged to be slidable underneath the ceiling area (14) of the process chamber (8).

5. Device according to claim 4, **characterised in that** the gantry (15, 25), in particular, by an opening of the process chamber (8) according to a kind of drawer that can be slid out.

6. Device according to one of the foregoing claims, **characterised in that** the gantry (15, 25) is arranged to be rotatable at least partly underneath the ceiling area (14) of the process chamber (8).

7. Device according to one of the foregoing claims, **characterised in that** one or several exchange assembly modules (19) are arranged on the gantry or different movable elements is or are arranged on the gantry (15, 25).

8. Device according to one of the foregoing claims, **characterised in that** the gantry (15, 25) is arranged on the whole or sections of the gantry in a non-horizontal position or so that it can be brought into such a position.

9. Device according to one of the foregoing claims, **characterised in that** at least one sub-gantry or exchange gantry (26) is arranged to be movable, rotatable or tiltable on the base gantry (25).

10. Device according to one of the foregoing claims, **characterised in that** the device comprises several sub or exchange gantries (26), wherein the sub or exchange gantries (26) are arranged in groups being distributed or distributable across the area of the installation space.

11. Device according to one of the foregoing claims, **characterised in that** the device comprises several gantries (15, 26) and the guide elements of the gantries (15, 25) are arranged so that the elements guided on them, which can be moved into and out of the process chamber (8), are movable across the entire area of the process chamber (8).

12. Device according to one of the foregoing claims, **characterised in that** the gantry (15, 25) and or the at least one exchange gantry (26) are movable motorically.

13. Device according to one of the foregoing claims, **characterised in that** the design of the ceiling area (14) of the process chamber (8) above the gantry (15, 25) is hinged or removable.

14. Device according to claim 13, **characterised in that** the gantry (15, 25) is foldable to the outside through the opened ceiling area (14) of the process chamber (8).

## Revendications

1. Dispositif (1) de fabrication d'objets tridimensionnels (2) par solidifications successives de couches d'un matériau de fabrication (3) en poudre, solidifiable par un rayonnement, en particulier par un rayonnement électromagnétique ou de particules, aux endroits correspondant à la section correspondante de l'objet, en particulier dispositif de fusion sélective par laser ou de frittage sélectif par laser, le dispositif comprenant :
un carter (7) dans lequel sont disposés une chambre de procédé (8) et au moins une chambre de construction (5, 6), l'au moins une chambre de construction (5, 6) comprenant un dispositif de transport (9) pour transporter l'objet (2) à l'intérieur de la chambre de construction (5, 6),
une chambre de dosage (4) pour stocker le matériau de construction (3),
un dispositif de revêtement (10) pour appliquer le matériau de construction (3) et
un dispositif d'irradiation (11) pour irradier les couches appliquées du matériau de construction (3),
le dispositif de revêtement (10) étant conçu de façon à pouvoir être entré et sorti au-dessus de la chambre de construction (5, 6), dans le but que le dispositif de revêtement (10) soit installé au moins sur un côté dans un dispositif de guidage, où ledit dispositif de guidage et/ou un autre dispositif de guidage pour d'autres éléments déplaçables à l'intérieur de la chambre de procédé (8) est constitué d'éléments déplaçables à l'intérieur de la chambre de procédé (8) suspendus dans la zone du plafond (14) de la chambre de procédé (8), en particulier d'un portique (15, 25), **caractérisé en ce que** le portique (15, 25) forme un portique de base (25) sur lequel sont disposés un ou plusieurs sous-portiques ou portiques de rechange (26).

2. Dispositif selon la revendication 1, **caractérisé en ce que** le portique (15, 25) présente une pluralité de zones de guidage superposées ou contiguës pour différents éléments mobiles.

3. Dispositif selon l'une des revendications précédentes, **caractérisé en ce que** le portique (15, 25) est disposé de façon remplaçable sur la surface du plafond (14) de la chambre de procédé (8).

4. Dispositif selon l'une des revendications précédentes, **caractérisé en ce que** le portique (15, 25) est disposé de façon mobile sous la surface de plafond (14) de la chambre de procédé (8).

5. Dispositif selon la revendication 4, **caractérisé en ce que** le portique (15, 25) est conçu de façon à pouvoir être sorti comme un tiroir, en particulier à travers une ouverture de la chambre de procédé (8).

6. Dispositif selon l'une des revendications précédentes, **caractérisé en ce que** le portique (15, 25) est au moins partiellement pivotable sous la surface de plafond (14) de la chambre de procédé (8).

7. Dispositif selon l'une des revendications précédentes, **caractérisé en ce qu'**au moins un module de montage amovible (19) est disposé sur le portique (15, 25) pour différents éléments mobiles.

8. Dispositif selon l'une des revendications précédentes, **caractérisé en ce que** tout ou partie du portique (15, 25) est disposé en position non-horizontale ou peut être placé dans une telle position.

9. Dispositif selon la revendication 9, **caractérisé en ce que** l'au moins un sous-portique ou portique de rechange (26) est disposé de façon mobile, pivotable ou basculante sur le portique de base (25).

10. Dispositif selon l'une des revendications précédentes, **caractérisé en ce que** le dispositif comprend plusieurs sous-portiques ou portiques de rechange, où les sous-portiques ou portiques de rechange (26) sont conçus pour être ou pouvoir être répartis en groupes sur la surface de l'espace de construction.

11. Dispositif selon l'une des revendications précédentes, **caractérisé en ce que** le dispositif comprend plusieurs sous-portiques ou portiques de rechange, où les éléments de guidage de plusieurs portiques (15, 25) sont conçus pour être disposés les uns dans les autres, de façon que l'on puisse faire entrer et sortir de la chambre de procédé (8) des éléments sur toute la surface de la chambre de procédé (8).

12. Dispositif selon l'une des revendications précédentes, **caractérisé en ce que** le portique (15, 25) et/ou l'au moins un portique de rechange (26) est réglable à l'aide d'un moteur.

13. Dispositif selon l'une des revendications précédentes, **caractérisé en ce que** la surface de plafond (14) de la chambre de procédé (8) au-dessus du portique (15, 25) est conçue pour être repliable ou amovible.

14. Dispositif selon la revendication 14, **caractérisé en ce que** le portique (15, 25) est conçu pour être dépliable vers l'extérieur à travers la surface de plafond ouverte (14) de la chambre de procédé (8).
